# EUROPEAN PATENT APPLICATION

(11) **EP 2 628 772 A1**
(43) Date of publication of application: **21.08.2013**
(21) Application number: 12460084.2
(22) Date of filing: 06.12.2012
(51) Int. Cl.: C08L 95/00, C08L 17/00, C08J 3/20

(54) **Method for producing rubber powder modified asphalt and product of continous asphalt modification**

(30) Priority: 20.02.2012 PL 39817812
(71) Applicant: MDM NT Spólka z Ograniczona Odpowiedzialnoscia, 43-346 Bielsko-Biala (PL)
(72) Inventor: Maslanka, Marek, 43-445 Dziegielów (PL); Formela, Krzysztof, 80-535 Gdansk (PL)
(74) Representative: Rygiel, Andrzej

(57) **Abstract**

The object of the invention is the method of producing rubber powder modified asphalt in a double screw extruding machine and the product of continuous asphalt modification.

A method for producing rubber powder modified asphalt in a continuous process using a twin-screw extruder is characterised in that rubber powder and asphalt are batched into the twin-screw extruder with a cylinder temperature ranging from 60°C to 400°C, where extruder screws are co-rotating or counterrotating, with the co-rotating screws preferred.

According to the invention, the product of continuous asphalt modification is asphalt in the amount of up to 99 wt %, rubber powder in the amount of 1 to 99 wt %, and additives in the amount of up to 80 wt %.

## Description

The object of the invention is a method for producing rubber powder modified asphalt using a twin-screw extruder and a product of continuous asphalt modification.

The method of using crumb rubber as asphalt modifiers has been proposed by Charles McDonald who was the first one to apply crumb rubber modified asphalt to repair road pavement failures in the 1960s. Methods for obtaining plastic surfaces consisting in thermal degradation of crumb rubber in the environment of asphalt or asphalt with kerosene and added maltenes are disclosed in McDonald's US patents: US 3891585, US 4069182, US 4021393, US 4085078, US 3919148, US 3844668.

Research on asphalt rubber binders carried out during the last 50 years confirm a favourable impact of rubber powder, which is also confirmed by the fact that rubber powder comes in second among the most often used asphalt modifiers, ranking only behind styrene-butadiene-styrene copolymer. The application of rubber powder as a modifier in asphalts and mineral-asphalt mixtures improves their plasticity and resistance to permanent deformation, fatigue strength of pavements, frost resistance as well as the comfort and safety of driving due to shorter braking distance. It has also been ascertained that rubber powder modified asphalts reduce the level of noise generated at the point of car wheels contact with road pavements and are at the same time more durable and the costs of their maintenance are lower in comparison with pavements based on unmodified binders. Furthermore, the application of rubber powder obtained from crumb rubber mainly from used car tyres is a pro-environmental activity that contributes to protecting the natural environment.

Despite the above-mentioned advantages, the application of rubber powder as the asphalt modifier is still limited mainly for economic reasons. The reasons are considerable production costs, the need to modify or adapt the machines used currently in the industry and high energy consumption costs, since asphalt modification with rubber powder requires a long period of agitating at increased temperatures to ensure obtaining appropriate properties of modified binder. Furthermore, the compositions obtained are characterised by low stability and high viscosity that is a considerable impediment to pumping, batching and laying them during road pavement construction works.

US Patent No. 338849 discloses asphalt modification with reclaimed rubber and polyethylene and/or post-production milled polyethylene, in which it was confirmed that polyethylene added to reclaimed rubber reduces the temperature of processing asphalt with reclaimed rubber at the same time guaranteeing better dispersion of it in asphalt. This results from the fact that long polyethylene chains can penetrate into hydrocarbon lattice expanding it, which facilitates dispersion of large asphalt molecules. Furthermore, the mixture proposed can also contain gasoline resin and fillers.

US Patent No. 4068023 describes paving asphalt modified with rubber powder and with mineral oils employed. The method of production of the so-called rubberized asphalt consists in generating the asphalt-mineral oil mixture at a temperature exceeding 300°F to obtain a homogeneous composition.

US Patent No. 4166049 discloses rubber modified asphalt obtained as a result of mixing asphalt and powdered and/or reclaimed rubber. Modification is carried out at a temperature of 350-450°F, for a period from 30 minutes to 2 hours.

US Patent No. 4211576 discloses a method for modifying asphalt with crumb rubber. According to the invention, crumb rubber or coal and crumb rubber mixtures are solved in a highly aromatic petroleum fraction to produce homogeneous compositions with pitch-like physical properties. The resulting composition can then be added to asphalt. Modified asphalt can be utilized in e.g. seals, cements and road paving compositions. The modification process is carried out at a temperature of 350÷850°F, for a period of time between 12 minutes and 3 hours, depending on the homogeneity of the composition produced.

US Patent No. 4430464 discloses a pavement binder composition containing rubber particles of the particle sizes below 300 µm digested in asphalt at a temperature in the range of 180 to 220°C for a period of from 1 hour to 2 hours.

US Patent No. 4588634 discloses roofing shingles comprising the composition of asphalt, crumb rubber and/or reclaimed rubber and mineral stabilizers and the elastomeric polymer composition. According to examples, the composition was produced at a temperature of 370-410°F, for 45 minutes.

US Patent No. 4992492 discloses the mixture of asphalt or asphalt with sulphur, crumb rubber, process oil and unsaturated synthetic elastomers having a molecular weight greater than 100 000. The mixture produced at a temperature of between 175°C and 180°C by agitating for approximately 2 hours, keeps its properties without any notable change for 10 days.

European Patent EP 0305225 discloses a process for preparing a binder based on bitumen and rubber powder characterised by improved stability. The composition comprises bitumen, rubber powder, aromatic oil, elastomers and catalysts. The product is obtained by mixing substrates at a temperature of between 175°C and 180°C for approximately 2 hours.

US Patents No. 5334641 and No. 5525653 disclose methods for obtaining homogeneous asphalt-rubber mixtures formed by reacting fine ground rubber with particle size below 300 µm with paving asphalt. The composition is formed in less than 25 minutes at a temperature of minimum 190°C.

US Patents No. 5397818 and No. 5583168 disclose a process consisting in distillation of the mixture of ground tire rubber and asphalt, oxidized with air under pressure at a temperature of 350÷485°F. The products are homogenized rubberized asphalt compositions.

US Patent No. 5719215 discloses an asphalt and rubber composition where rubber particles are vulcanized in hydrocarbon oils and then subject to thermal and mechanical treatment. Reclaimed rubber obtained is then added to asphalt with compatibilizing agents employed in the form of liquid rubbers, for example amine-functionalized polybutene. The composition is agitated to achieve required homogeneity determined on the basis of sedimentation of rubber vulcanite particles. According to examples, the said composition was mixed at a temperature between 180°C and 240°C for 2 hours.

US Patent No. 5492561 discloses a process consisting in preparing an asphalt composition in a reactor vessel by mixing asphalt in the amount of 80÷90 wt % and crumb rubber in the amount of 10÷20 wt %. Mixing is carried out at a temperature of up to 260°C, for a period of time from 5 h to 10 h, until a homogeneous asphalt composition is obtained.

Published Patent Application WO 99/27018 and US Patent No. 5959007 disclose the application of polymers used in order to improve the storage stability of rubber powder modified asphalts. This method consists in polymers being dispersed and swollen in oils, and then the resulting composition is incorporated into rubber powder modified asphalts. The disadvantage of the solution proposed is that the process of polymer swelling in the oils contained in asphalts takes very long time, therefore, the results obtained are not always favourable. According to examples, modification of asphalt with rubber powder is carried out at a temperature of approximately 200°C for 2 hours.

US Patent No. 5683498 discloses a process for obtaining a homogeneous rubber powder-modified asphalt composition. The method consists in obtaining a mixture of hydrocarbon products and particles of rubber, and then distilling fractions from the said mixture to a temperature of approximately 300°C, which enables devulcanization of rubber powder and removal of the volatile low molecular weight hydrocarbon fractions from crumb rubber. Addition of distillation residue in the amount of 3-40 parts by weight to asphalt enables obtaining a homogeneous composition.

European Patent EP 2055745 discloses a composition which comprises bitumen, crumb rubber, a polymer and a vulcanizing agent and/or accelerating agents of said vulcanization. According to examples, the composition is agitated at a temperature of 190°C for 90 minutes.

US Patent Application No. 2009/0215930 discloses a method for modifying bitumen with waste rubber powder, including a first step of mixing rubber powder with aromatic oils in proportions of 60-98 wt % and 2-40 wt % respectively, and a second step of adding the composition obtained to bitumen in proportions of 3-30 wt % and 70-97 wt % respectively. The method proposed allows reducing the mixing time of 5-40 minutes and energy costs due to a process temperature of 140-200°C needed for bitumen modification with rubber powder.

Furthermore, there are also methods known of producing asphalt and polymer compositions using extruding machines. The resulting products are mainly applied as roofing membranes.

US Patent No. 5025044 and European Patent EP 0426025 describe the mixtures of asphalt or asphalt emulsions with aqueous elastomeric lattices, mainly polychloroprene and its copolymers, and other latexes, such as polyisoprene, polystyrene/butadiene, polybutadiene, obtained through extrusion by means of an extruder. Mechanical and chemical asphalt-latex reaction in the extruder makes latex coagulate, which removes water from the composition, thus allowing the omission of external drying of mixture components. The mixture obtained contains 5-98 wt % of asphalt and 2-95 wt % of elastomer and can be used as an insulating material.

US Patent Application No. 2009/0145331 discloses a method for modifying bitumen with polymers using an extruder, where at least two twin-screw extruders combined in a cascade arrangement are used during the modification process. In the said Application, polymer materials are defined as styrene-butadiene-styrene (SBS) block copolymer and atactic polypropylene, and their content in the resulting extruded mixture is 3-80 wt %. Furthermore, glass fibres and/or polymer fibres, fillers and flame retardant materials can be used in the composition. Bitumen compositions comprising SBS and high content of calcium carbonate are given as examples. The composition proposed is used for production of roofing membranes used as waterproofing materials.

The described examples illustrating the prior art concerning rubber powder modified asphalts and methods for production thereof do not disclose the use of a twin-screw extruder.

Unlike generally known energy-consuming methods of periodic asphalt modification with rubber powder, the invention proposed contributes to production cost reductions and improved stability of compositions obtained. The invention proposed contributes to environmental protection by recycling waste rubber, mainly used car tyres. Furthermore, a shorter time needed to produce rubber powder modified asphalts reduces gas emissions, thus meeting the assumptions of the Kyoto Protocol.

According to the invention, a method for producing rubber powder modified asphalt in a continuous process using a twin-screw extruder is **characterised in that** rubber powder and asphalt are batched into the twin-screw extruder with a cylinder temperature ranging from 60°C to 400°C, where extruder screws are co-rotating or counter-rotating, with the co-rotating screws preferred.

According to the invention, the product of continuous asphalt modification is **characterised in that** it comprises asphalt in the amount of up to 99 wt %, rubber powder in the amount of 1 to 99 wt %, additives in the amount of up to 80 wt %. Additives in the amount of up to 80 wt % serve as fillers and/or compatibilizing agents and/or plasticizers and/or asphalt-rubber binder modifiers. Asphalt used during rubber powder modification comprises hydrocarbon binders, including bituminous binders, tar, binders containing straw and their derivatives. Rubber powder is generated as a result of mechanical grinding of crumb rubber, preferably car tyres, and it contains rubber particles up to 5 mm in size, preferably up to 2 mm in size.

According to the invention, asphalt modification allows production cost reductions and improves stability of the composition compared to rubber powder modified binders obtained in a wet process, while maintaining favourable functional parameters. The resulting asphalt-rubber composition can be used for example for production of road pavements, roofing materials, leak stoppers, seals for joints between construction components, cements, asphalt glues and emulsions, and other similar products.

Components used in the examples:
- asphalt grade 160/220, which penetration at 25°C [1/10 mm] is between 160-220 according to the product data sheet.
- rubber powder fractions up to 1.5 mm, obtained by grinding in ambient temperature.

The continuous method proposed using the twin-screw extruder has been compared to a generally used periodical method known as the *wet process* of asphalt modification with rubber powder, carried out using a high-speed rotor-stator homogenizer fitted with a grinding tip as presented in Example I.

### Example I.

Modification of asphalt grade 160/220 was carried out using a co-rotating twin-screw extruder (Ud=40, d=20). A cylinder temperature within all zones and a head temperature were constant at 100°C, rotational speed 500 min⁻¹. The time of modification was approximately 5 minutes. Asphalt/rubber powder mass ratio was 90:10 wt %. Penetration determined by a needle at 25°C was 127.5 [1/10 mm].

Asphalt grade 160/220 was modified with rubber powder using a periodic method and a high-speed homogenizer. Asphalt/rubber powder mass ratio was 90:10 wt %. Modification was carried out at 180°C, for 30 minutes, with the number of revolutions 4000 min⁻¹. Penetration determined by a needle at 25°C was 126 [1/10 mm].

## Claims

1. A method for producing rubber powder modified asphalt in a continuous process using a twin-screw extruder **characterised in that** rubber powder and asphalt are batched into the twin-screw extruder with a cylinder temperature ranging from 60°C to 400°C, where extruder screws are co-rotating or counter-rotating, with the co-rotating screws preferred.

2. The product of continuous asphalt modification **characterised in that** it comprises asphalt in the amount of up to 99 wt %, rubber powder in the amount of 1 to 99 wt %, additives in the amount of up to 80 wt %.

3. The product of continuous asphalt modification according to Claim 2 **characterised in that** additives in the amount of up to 80 wt % serve as fillers and/or compatibilizing agents and/or plasticizers and/or asphalt-rubber binder modifiers.

4. The product of continuous asphalt modification according to Claim 2 **characterised in that** asphalt used during the modification with rubber powder comprises hydrocarbon binders, including bituminous binders, tar, binders containing straw and their derivatives.

5. The product of continuous asphalt modification according to Claim 2 **characterised in that** rubber powder is generated as a result of mechanical grinding of crumb rubber, preferably car tyres.

6. The product of continuous asphalt modification according to Claim 5 **characterised in that** rubber powder contains rubber particles up to 5 mm in size, preferably up to 2 mm in size.
